# EUROPÄISCHE PATENTSCHRIFT

(11) **EP 0 310 005 B1**
(45) Veröffentlichungstag und Bekanntmachung des Hinweises auf die Patenterteilung: **24.11.1993**
(21) Anmeldenummer: 88115943.8
(22) Anmeldetag: 28.09.1988
(51) Int. Cl.: A62D 3/00, B09B 5/00, C09K 3/32

(54) **Verfahren zur Verbesserung der mikrobiellen Reinigung von mit Kohlenwasserstoffen, insbesondere mit Mineralölen kontaminierten Böden, durch mikrobielle Oxidation**
Process for modifying the microbial cleansing of soil contaminated with hydrocarbons, in particular with mineral oils, by microbial oxidation
Procédé pour améliorer l'épuration du sol contaminé par les hydrocarbures, surtout par les huiles minérales, au moyen de l'oxydation microbienne

(30) Priorität: 02.10.1987 DE 3733341
(43) Veröffentlichungstag der Anmeldung: 05.04.1989
(73) Patentinhaber: WINTERSHALL AKTIENGESELLSCHAFT, D-34112 Kassel (DE)
(72) Erfinder: Lindoerfer, Walter, Dr., D-3500 Kassel (DE); Sewe, Kai-Udo, Dr., D-2847 Barnstorf (DE); Oberbremer, Axel, D-3302 Cremlingen (DE); Mueller-Hurtig, Reinhard, Dr., D-3300 Braunschweig (DE); Wagner, Fritz, Prof. Dr., D-3300 Braunschweig-Stoeckheim (DE)
(74) Vertreter: Springer, Hans Jörg

(56) Entgegenhaltungen:
- EP-A- 0 048 339
- EP-A- 0 153 634
- EP-A- 0 228 626
- DE-A- 2 533 775
- DE-A- 2 739 428
- US-A- 4 415 662
- CHEMICAL ABSTRACTS, Band 95, Nr. 21, 23. November 1981, Seite 508, Zusammenfassung Nr. 185574t, Columbus, Ohio, US

## Beschreibung

Gegenstand der Erfindung ist ein Verfahren zur Verbesserung der mikrobiellen Reinigung von mit Kohlenwasserstoffen, insbesondere mit Mineralölen, kontaminierter Böden durch mikrobielle Oxidation.

Mit Zunahme der Weltbevölkerung und der damit verbundenen Industrialisierung ist der Umweltschutz von weltweiter, elementarer Bedeutung.

Dazu gehört die Sanierung von mit Kohlenwasserstoffen, insbesondere mit Mineralölen kontaminierter Böden, in der Umgebung von Erdöl produzierenden und verarbeitenden Betrieben, oder aus Ölunfällen beim Transport von beispielsweise Rohöl und Leichtöl, oder aus Leckagen von Ölleitungen, Lagertanks und Behältern, oder aus Unfällen. Dazu gehören auch Ölverschmutzungen von Küsten und Stränden und Wattboden durch Ablassen von Ölresten ins Meer, die bei Flut und durch Wind an Land getrieben werden und sich dort mit den Böden vermischen.

Ein Verfahren der Technik wird in "Wasser, Luft und Betrieb, wlb.", IFAT Report 87, beschrieben. Es sollen kontaminierte Böden ohne Zusatz von Chemikalien durch eine mechanische Hochdruck-Bodenwäsche im Container dadurch gereinigt werden, daß mittels des Druckstrahles auf der Oberfläche der Bodenpartikel haftendes Öl abgesprengt wird.

Dieses Verfahren ist nur zur Abtrennung einer Teilmenge geeignet. Es bleibt eine Restmenge an Mineralöl in den Kapillaren haften. Diese Restmenge muß danach unter erneuter Bewegung des Bodens in einem weiteren Verfahren entfernt werden. Dazu kommt, daß ein Teil des Mineralöls emulgiert oder vermischt wird, und erst durch Absetzen aus dem Druckwasser in Klärbehälter entfernt werden muß. Es ist also auch eine Aufbereitung des Druckwassers erforderlich.

Es ist verständlich, daß sich die Fachwelt anderen Verfahren zur Entsorgung von mit Mineralölen kontaminierter Boden zugewandt hat.

Ein anderes, technologisches Verfahren arbeitet zur biologischen Sanierung kontaminierter Böden mit speziell gezüchteten Mikroorganismen, genannt "Noggies". Solche Mikroorganismen sollen aus einer Kombination aerober und anaerober adaptierter Bakterienmutanten bestehen. Diese werden gefriergetrocknet und auf Substraten fixiert. Diese Arbeitsweise ist in "Umwelt, 4/86, 293", veröffentlicht.

Nach diesem Stand der Technik wird die verunreinigte Oberfläche durchfräst und auf den verunreinigten Boden die gezüchtete Bakterienmasse mit Nährstoffen und oberflächenaktiven Substanzen als wäßrige Lösung aufgebracht. Nach 6 Wochen soll die Ölkonzentration im Boden um etwa 66 % verringert sein.

Im "Umweltmagazin, Mai 1986" wird beschrieben, spezielle Mikroorganismen einzusetzen, die auf Kiefernborke angesiedelt sind. Diese Mikroorganismen sollen deshalb speziell geeignet sein für die Veratmung von Mineralöl in damit verunreinigten Böden, weil die darin enthaltenen Harze des Kiefernholzes als C-Quelle verarbeitet werden. Diese Harze sollen Verbindungen enthalten, die auch im Mineralöl enthalten sind.

Nach dieser Arbeitsweise muß zunächst ein Gemisch aus kontaminiertem Boden und Kiefernborke hergestellt werden. Dieses Gemisch wird dann auf eine Folie geschichtet. Durch im Regenwasser gelösten Sauerstoff soll die Veratmung des Mineralöls erfolgen.

Auch diese Arbeitsweise erfordert einen längeren Zeitraum bis zum Abbau des Mineralöls. Dazu kommt die Notwendigkeit, das aufgeschichtete Gemisch gegen den Untergrund abzudichten und Sickerwasser getrennt aufzufangen.

Ein anderes Verfahren nach dem Stand der Technik ist in "Diversified Techn. Belgium, SA" veröffentlicht. Es wird vorgeschlagen, als Erdöl-Kohlenwasserstoffe oxidierende Bakterien Pseudomonas Putida als trockenes Pulver in Mischung mit Mineralsalzen mit Druckluft in den kontaminierten Boden zu injizieren. Durch laufende Probenahme sollen das Wachstum und der Fortschritt der Öl-Oxidation festgestellt werden.

Diese Arbeitsweise führt in der Praxis zu ungleichmäßiger Verteilung im Boden. Die Geschwindigkeit des Ölabbaus ist von der unregelmäßigen Zufuhr von Wasser und Luft abhängig und somit schwierig zu steuern.

Ein anderes Verfahren der Technik, das "IAT-Biosystem" Erde, beschreibt die Optimierung der Lebensbedingungen der Mikroorganismen im Boden, so daß der Abbau von Kohlenwasserstoffen innerhalb von 12 bis 24 Monaten vollzogen sein soll.

Es werden als Substrate eingesetzt:
"Bio-Terra C" bestehend aus einem natürlichen organischen Substrat mit adaptierten Mikroorganismen.
"Bio-Borke G" aus Baumrinde mit adaptierten Mikroorganismen.
Beide Substrate sind Handelsprodukte der Umweltschutz-Nord GmbH, Bremen. Es sollen bekannte Mikroorganismen eingesetzt werden. Die Entsorgung der kontaminierten Böden soll durch deren Abhebung und Vermischung mit den Substraten und Ablagerung auf Lagerflächen für "ca. zwei Jahre" erfolgen. Es soll das Oberflächenwasser gleichmäßig das Bio-Abbaubeet durchdringen. Auch diese Arbeitsweise nach dem Stand der Technik benötigt einen längeren Zeitraum für den oxidativen, mikrobiellen Abbau von Mineralölen.

R. Rüddiger trifft in "Umweltschutz, Februar 1986, 90-93", folgende Feststellung: "Bis heute ist kein Verfahrensweg bekannt geworden, der es ermöglicht, Kohlenwasserstoffe im Untergrund großflächig mikrobiell in realistischen Zeiten abzubauen."

Von dem dargestellten Stand der Technik geht das Verfahren der Erfindung aus.

Die Beseitigung von Öl-kontaminierten Wässern und Böden wird auch in Patentschriften beschrieben.

Die DE-OS 24 22 231 macht ein Verfahren zum Schutz gegen Ölverschmutzung mit Hilfe von Mikroorganismen bekannt.

Nach diesem Verfahren sollen Strände und Oberflächen mit einer wäßrigen Aufschlämmung von Mikroorganismen aus Arthrobacter, Micrococcus und Achromobacter durch Aufsprühen behandelt werden. Auch dieser Vorschlag geht über den bekannten, technologischen Stand der Technik nicht hinaus und kann nicht zu einer sicheren und vollständigen mikrobiellen Aufbereitung von durch Mineralöl verunreinigten Stränden und Böden führen.

Die DE-OS 25 33 715 macht ein Verfahren zur Beseitigung offener und latenter Verölungen bekannt. Nach dieser Arbeitsweise sollen zum beschleunigten Abbau von Mineralölen im Untergrund und an Stränden Sauerstoff in Form von flüssigen O₂-Trägern wie H₂O₂ der kontaminierten Masse zugeführt werden. Diesem flüssigen Sauerstoffträger sollen auch Tenside und Nährsalze zugegeben werden.

Dieser Vorschlag hat den Nachteil, daß durch aktiven Sauerstoff in Form von Peroxiden eine Schädigung der Bakterienpopulation durch toxische Wirkung nicht ausgeschlossen werden kann. Diese führt zu einer starken Hemmung der Veratmung des Mineralöls. Außerdem zerfällt die instabile Lösung auch unter katalytischer Wirkung von Bodenkolloiden rasch und diese steht deshalb nur für kurze Zeit im Boden zur Verfügung.

Auch die DE-OS 27 39 428 befaßt sich mit der Beschleunigung des mikrobiellen Abbaues von Wasser und Strände kontaminierenden Mineralölen. Es sollen den Mikroorganismen zur Metabolisierung von Kohlenwasserstoffen ausgewählte P- und N-Verbindungen in nicht-wasserlöslicher Form im Wasser hinzugegeben werden. Mit solchen, erst langsam freiwerdenden Nährelementen soll das Wachstum zugesetzter und auch der natürlichen Mikroorganismen gefördert werden. Nach den Ergebnissen wird in 25 Tagen nur eine teilweise oxidative Veratmung mit Restgehalten zwischen 36,62 und 65,92 % Öl erreicht. Auch dieser Vorschlag führt zu keiner sicheren und vollständigen mikrobiellen Aufbereitung von Mineralölen.

Die DE-PS 28 43 685 macht in jüngster Zeit ein Verfahren zur Beseitigung von Ölverschmutzungen durch Abtrennung von Ölen oder Erdölkohlenwasserstoffen aus deren festen oder fest-flüssigen Gemischen mit Erde, Sanden oder Rückständen unter Verwendung von mikrobiell erzeugten Glykolipiden bekannt. Nach diesem Verfahren wird das Glykolipid mit der festen Phase zu einer Trübe vermischt und daraus die aufsteigende ölhaltige Phase abgetrennt. Es kann auch Luft zum Anheften der Öltröpfchen zum rascheren Aufsteigen der Ölphase in die wäßrige Trübe eingeblasen werden.

Diese Arbeitsweise soll eine rasche Abtrennung des Mineralöls aus den kontaminierten Erden und Sanden bewirken. Dieses Verfahren führt jedoch nicht zu einem mikrobiellen oxidativen Abbau des Mineralöles zu CO₂ und H₂O bis zur Mineralisierung. Dieses Verfahren berührt das Verfahren der Erfindung nicht.

Es ist daher die Aufgabe der Erfindung, bekannte Technologien zur Reinigung von mit Kohlenwasserstoffen kontaminierten Böden so zu verbessern, daß die Vermehrung der Mikroorganismenpopulation in der Zeiteinheit rascher und bis zur praktisch vollständigen Mineralisierung erfolgt.

Es ist eine weitere Aufgabe der Erfindung, ein Verfahren zur raschen Beschleunigung des oxidativen, mikrobiellen Abbaus von Mineralölen und deren Produkten bis zu praktisch vollständigen Mineralisierung zu entwickeln.

Diese Aufgabe wird erfindungsgemäß dadurch gelost, daß den kontaminierten Boden direkt oder den kontaminierten, abgetragenen Bodenschichten, außer dem zum Abbau notwendigen Sauerstoff durch Belüftung, löslichen Nährstoffen, Wasser und lösliche oder dispergierte Biotenside für sich oder in Mischung mit chemischen Tensiden in einer oder mehreren Chargen in Zeitabständen in einer solchen Menge zudosiert werden, daß die Bildung toxisch wirkender, den mikrobiellen Abbau verlangsamender oder blockierender Zwischenprodukte, verhindert, gleichzeitig die Zugänglichkeit von Mineralölen und deren Produkte für die Mikroorganismen erhöht und dadurch eine beschleunigte, praktisch vollständige Mineralisierung durch Veratmung zu CO₂ und H₂O bewirkt wird.

Weitere Merkmale der Erfindung sind Gegenstand der Unteransprüche.

Kohlenwasserstoffe, die in der Praxis Böden kontaminieren, sind beispielsweise Erdöl-Raffinerie-Produkte aus Erdöl und chemisch modifizierte Erdölfraktionen.

Das folgende Ausführungsbeispiel demonstriert den technischen Effekt der Zeit in Tagen bis zu einer begrenzten Restentölung mit ölkontaminiertem Ackerboden in einem Reaktionsgefäß mit Zuluft von unten und Abluft nach oben ohne Bewegung des Bodens.

Es wird eine Probe eines Ackerbodens der oberen Erdschicht entnommen. Der Wassergehalt beträgt 13,5 Gew.% bei maximaler Wasserkapazität von 40 Gew.%. Es wird für die Durchführung des Versuches ein Wassergehalt von 33,75 Gew.% eingestellt.

Der von Steinen und Wurzelresten befreite Boden wird mit 10 Gew.% Rohöl, Typ Düste Valentis, aus dem Bohrbetrieb der Anmelderin, kontaminiert. Es werden 100 mg Tenside diesem Rohöl zugesetzt. Es werden 100 g trockener Ackerboden mit 20 mg eines Volldüngemittels, Handelsprodukt "Blaukorn" der Farbwerke Hoechst AG, Frankfurt, vermengt. Danach werden 10 g des Testöl-Tensid-Gemisches in die Bodenmenge eingerührt.

Dieser Modellversuch demonstriert, daß ohne Bewegung des Ackerbodens mit Luftzufuhr ohne die Zugabe von Tensid (1) in 112 Tagen nur ein Restölgehalt von 74 % erreicht wird. Dieser Versuch zeigt weiter, daß unter Zusatz von nichtionischem Tensid (2) ein Restölgehalt von 9 % und mit einem anionischen Tensid (3) von 16 % erreicht wird. Dieser technische Effekt des Verfahrens der Erfindung ist beträchtlich. Dieser Versuch zeigt auch, daß mit einem Rhamnoselipid (4) ein Restölgehalt von 12 % erreicht wird.

Diese alternativen und bevorzugten Biotenside ergeben in dem gleichen Zeitraum von 112 Tagen einen Restölgehalt zwischen 9 und 16 %. Dieser Versuch zeigt aber auch, daß ein solcher technischer Effekt mit chemischen Tensiden nicht erreicht wird. Diese (5) und (6) ergeben nur eine Restentölung von 69 %.

Dies liegt offenbar daran, daß chemische Tenside eine gewisse toxische Wirkung auf die Vermehrung der Mikroorganismenpopulation ausüben.

Der Fortschritt des mikrobiellen Abbaues kann durch Extraktion des Restölgehaltes mit Lösungsmitteln, oder durch analytische Methoden, festgestellt werden.

Die Versuchsergebnisse sind nachstehend tabellarisch zusammengestellt.

| Versuch | Zeit (Tage) | pH | Keimzahl* x 10' / ml | Restölgehalt |
|---|---|---|---|---|
| Kontrolle ohne Tensid 1 | 20 | 6,6 | 40 | 91 |
| | 48 | 7,0 | 15 | 80 |
| | 70 | 6,5 | 2 | 76 |
| | 96 | 7,0 | 1 | 73 |
| | 112 | 7,3 | 2,5 | 74 |
| Zusatz des nicht ionogenen THL-Diesters 2 | 20 | 7,6 | 25 | 54 |
| | 48 | 7,2 | 2 | 31 |
| | 70 | 7,6 | 1 | 13 |
| | 96 | 7,6 | 1 | 9 |
| | 112 | 7,8 | 3 | 9 |
| Zusatz des anionischen Trehalosetetraesters 3 | 20 | 6,5 | 40 | 74 |
| | 48 | 6,9 | 20 | 57 |
| | 70 | 6,8 | 5 | 30 |
| | 96 | 5,7 | 4 | 28 |
| | 112 | 6,9 | 0,8 | 16 |
| Zusatz von Rhamnoselipiden 4 | 20 | 6,5 | 45 | 78 |
| | 48 | 6,7 | 21 | 54 |
| | 70 | 6,8 | 1 | 28 |
| | 96 | 6,8 | 10 | 19 |
| | 112 | 7,0 | 5 | 12 |
| Zusatz des chemischen Tensides "Twenn 80" 5 | 20 | 6,4 | 50 | 82 |
| | 48 | 7,3 | 4 | 78 |
| | 70 | 0,8 | 0,5 | 75 |
| | 96 | 7,1 | 0,5 | 72 |
| | 112 | 7,0 | 0,4 | 69 |
| Zusatz des chemischen Tensides "Sepawet V2/642" 6 | 20 | 6,2 | 20 | 90 |
| | 48 | 7,3 | 20 | 79 |
| | 70 | 7,2 | 25 | 73 |
| | 96 | 7,2 | 15 | 71 |
| | 112 | 7,4 | 8 | 69 |

Das Verfahren der Erfindung wird auch durch das folgende Ausführungsbeispiel demonstriert. Dieser Modellversuch zeigt den technischen Effekt von Biotensiden auf die Mineralisierung von Mineralöl in Form eines Modellöles. Unter Mineralisierung wird der praktisch vollständig oxidative Abbau von Mineralölen und ihren Produkten durch Veratmung zu CO₂ und H₂O unter Bildung von Biomasse verstanden.

Submerskultivierungen zum Abbau des Modellöls mit der natürlichen Microorganismenpopulation eines Ackerboden mit oder ohne Tensidzusatz.

Sämtliche Submerskultivierungen erfolgten in einem 10 l Bioreaktor der Fa. Braun, Melsungen, ausgerüstet mit einem Umwurfsystem. Zur weiteren Ausstattung gehörten eine pH-Elektrode, eine automatische Säure-Laugentitrationsanlage zur Konstanthaltung des pH-Wertes, eine po2-Elektrode zur kontinuierlichen Messung der Gelöstsauerstoffkonzentration, eine Einrichtung zur Thermostatisierung mit Thermometer sowie ein Rotameter zur Einstellung der Belüftungsrate.

| Kultivierungsansatz: | |
|---|---|
| Leitungswasser | 8000 ml |
| Ackerboden (Trockensubstanz) | 800,0 g |
| Modellöl | 80 ml |
| Tensid (bez.a.Wirksubstanz) | 1.6 g |
| (NH₄)SO₄ | 48.0 g |
| MgSO₄ 7H₂O | 0.8 g |
| KCl | 0,8 g |
| CaCl₂ 2H₂O | 0,4 g |
| FeCl₃ 6H₂O | 0,2 g |

| Reaktionsbedingungen: | |
|---|---|
| Temperatur | 25°C |
| pH-Bereich | 7,3 - 7,6 |
| Rührsystem | Umwurfsystem mit 2 Turbinenrührern |
| Drehzahl | 450 Upm |
| Belüftungsrate | 3,36 Normliter Luft pro Stunde |
| Titration | 3 N NaOH bzw. 3 N H₃PO₄ |

| Eingesetztes Modellöl: | |
|---|---|
| Mihagol S (89 % Tetradecan + 9 % Pentadecan) | 48,0 Gew.% |
| 1,2,4-Trimethylcyclohexan | 20,0 Gew.% |
| 1-Hexadecen | 10,0 Gew.% |
| 2,6,10,14-Tetramethylpentadecen (Pristan) | 10,0 Gew.% |
| Naphthalin | 6,5 Gew.% |
| 1-Phenyldecan | 5,5 Gew.% |

Die folgende Tabelle zeigt den technischen Effekt der Biotenside oder des Gemisches mit chemischen Tensiden im Gewichtsverhältnis 1:1 auf den mikrobiellen Abbau der Mineralöl-Kohlenwasserstoffe zu CO₂ und H₂O.

| Tensid | Mineralisierung [%] |
|---|---|
| ohne Tensid | (0) 11 |
| Trehalosedicorynomycolat | (1) bis 100 |
| Trehalosetetraester | (2) 72 |
| Rhamnoselipide | (3) 64 |
| Sepawet | (4) 39 |
| Sepawet/Trehalosedicorynomycolat (1:1) | (5) 81 |

Diese Ergebnisse werden nach einer eingestellten Zeit von nur 95 Stunden erzielt. In dieser Zeit wird mit (1) bereits praktisch die vollständige Mineralisierung erreicht. Mit den Biotensiden (2) und (3) ist die Abbaugeschwindigkeit geringer gegenüber (1). Es muß also zur praktisch vollständigen Mineralisierung die eingestellte Zeit verlängert werden.

Der Modellversuch bietet die Möglichkeit, die einzustellende Verweilzeit im Festbettreaktor zu bestimmen. Dieser Versuch zeigt auch für das Gemisch aus Biotensid und chemischen Tensid (5) eine Beschleunigung der Abbaugeschwindigkeit gegenüber (0) ohne Tensid in der gleichen Größenordnung wie mit Biotensiden. Dagegen zeigt der Einsatz von nur chemischem Tensid (5) eine wesentliche Verlangsamung der Abbaugeschwindigkeit.

Dieser technische Effekt der spezifischen Wirkung der Biotenside für sich oder im Gemisch mit chemischen Tensiden nach dem Verfahren der Erfindung ist überraschend.

Dieses spezielle Verfahren im Bioreaktor ist auch als Schnelltest zur Kontrolle des Fortschrittes des mikrobiellen Abbaues von mit Mineralölen kontaminierten Erden und Sanden geeignet.

Das Verfahren der Erfindung bietet also den technischen Effekt der Beschleunigung des oxidativen mikrobiellen Abbaues bis zur praktisch vollständigen Mineralisierung durch Veratmung zu CO₂ und H₂O unter Bildung von sich abbauender Biomasse. Dieser überraschende technische Effekt ist auf den Zusatz von nicht toxisch wirkenden Biotensiden zurückzuführen. Der Stand der Technik hat nicht erkannt, daß ohne den Zusatz von Biotensiden beim oxidativen mikrobiellen Abbau von Mineralölen toxische Zwischenprodukte entstehen, die den Abbau verlangsamen oder den weiteren Abbau blockieren.

Als toxisch wirkende Zwischenprodukte wurden organische Säuren festgestellt, insbesondere Salicylsäuren und mit bacteriostatischer Wirkung. Diese intermediären Stoffe bewirken eine starke Hemmung der Aktivität der Population der Mikroorganismen im Boden.

Die Verfahren nach dem Stand der Technik benötigen deshalb einen längeren Zeitraum zum Abbau des Mineralöls oder deren Produkte in Böden. Diese Verfahren nach dem Stand der Technik können also durch den Zusatz von Biotensiden nach dem Verfahren der Erfindung verbessert werden.

Es ist untersucht, ob gemäß dem Verfahren der Erfindung mit Biotensiden oder mit chemischen Tensiden bacteriostatisch wirkende Verbindungen auftreten, welche Abbaugeschwindigkeiten hemmen oder blockieren.

Die folgende Tabelle zeigt die Bildung von Salicylsäure als Hemmstoff bei der Oxidation des Modellöls in Abhängigkeit von der Zeit für die Tenside des Mineralisierungsversuches.

| Tensid | Salicylsäure | |
|---|---|---|
| | 20 h | 50 h |
| ohne Tensid | (0) ++ | ++ |
| Trehalosedicorynomycolat | (1) - | - |
| Trehalosetetraester | (2) - | - |
| Rhamnoselipide | (3) - | - |
| Sepawet | (4) + | - |
| Sepawet/Trihalosedicorynomycolat (1:1) | (5) + | - |
| ++ = 50 mg Salicylsäure pro Liter + = 50 mg Salicylsäurenachweis negativ | | |

Es wird als Ergebnis festgestellt, daß ohne den Zusatz von Tensiden eine starke Hemmwirkung auftritt.

Es wird weiter gefunden, daß durch Zusatz von Biotensiden gemäß dem Verfahren der Erfindung keine Salicylsäure als hemmend wirkender Stoff entsteht. Das Verfahren der Erfindung gestattet also, den mikrobiellen oxidativen Abbau des Modellöls als Typ für Mineralöle gegenüber dem Stand der Technik mit Beschleunigung durchzuführen.

Die im Boden festgehaltenen Mikroorganismen werden im Laufe der Zeit abgebaut und stellen für Boden und Grund keine Gefahr mehr dar.

Das Verfahren der Erfindung bietet den technischen Vorteil der verbesserten Reinigung von mit Kohlenwasserstoffen kontaminierten Böden bis zur Mineralisierung in optimal kurzer Zeit.

Das Verfahren der Erfindung bietet auch noch den Vorteil, daß durch die praktisch vollständige Reinigung der Böden ein Belassen der Böden am Ort der Kontaminierung unter Vermeidung einer Deponierung als Sonderabfallstoffe möglich ist.

## Patentansprüche

1. Verfahren zur Verbesserung der mikrobiellen Reinigung von mit Kohlenwasserstoffen, insbesondere mit Mineralölen kontaminierter Böden durch mikrobielle Oxidation, dadurch gekennzeichnet, daß den kontaminierten Böden direkt oder den kontaminierten, abgetragenen Bodenschichten, außer dem zum Abbau notwendigen Sauerstoff durch Belüftung, löslichen Nährstoffen, Wasser und lösliche oder dispergierte Biotenside für sich oder in Mischung mit chemischen Tensiden in einer oder mehreren Chargen in Zeitabständen in einer solchen Menge zudosiert werden, daß die Bildung toxisch wirkender, den mikrobiellen Abbau verlangsamender oder blockierender Zwischenprodukte, verhindert, gleichzeitig die Zugänglichkeit von Mineralölen und deren Produkte für die Mikroorganismen erhöht und dadurch eine beschleunigte, praktisch vollständige Mineralisierung durch Veratmung zu CO₂ und H₂O bewirkt wird.

2. Verfahren nach Anspruch 1, dadurch gekennzeichnet, daß ein Gemisch aus Biotensiden und chemischen Tensiden im Verhältnis von 0,1 bis 1:1 in Gew.% zudosiert wird.

3. Verfahren nach den Ansprüchen 1 und 2, dadurch gekennzeichnet, daß als Biotenside Mono-, Di-, Oligo- und Polysaccharide als hydrophiler Molekülanteil und funktionalisierte Fettsäuren als hydrophober Molekülanteil, insbesondere Trehalosedicorynomycolat, Trehaloselipidtetraester, Rhamnoselipide, eingesetzt werden.

4. Verfahren nach den Ansprüchen 1 bis 3, dadurch gekennzeichnet, dass als chemische Tenside i- Alkylphenylpolyethylenglykolacetat, als Mischtensid aus 60 % ionischer und 40 % nichtionischer Komponente mit der Charakterisierung als Nonylphenolpolyetaacetat mit 5 Ethylenoxideinheiten, und nichtionisches Polyoxyethylensorbitanmonooleat, eingesetzt werden.

5. Verfahren nach den Ansprüchen 1 bis 4, dadurch gekennzeichnet, daß als Biotenside eingesetzt werden:
Glycolipide folgender Struktur: 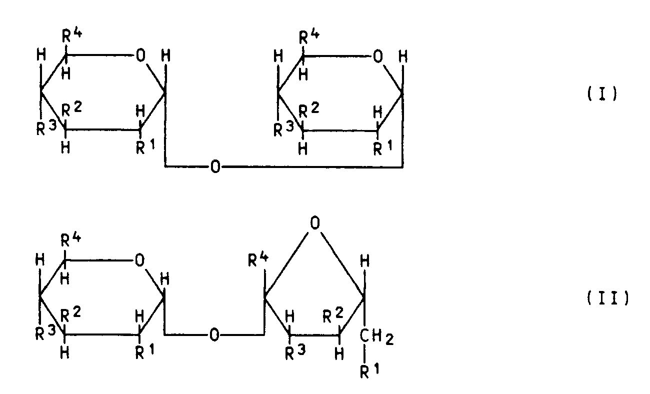 wobei in den Formeln I und II die glycosidische Bindung 1,1; 1,2; 1,3; 1,4; 1,6 in den anomeren Formen α,α; α,β; β,β und die Gruppen R¹ bis R³ in den Positionen 1, 2, 3, 4 in cis- oder trans-Konfiguration vorliegen und R¹ bis R³ ein Hydroxy-, Alkoxy-, Alkylcarbonyloxy-, Alkylcarboxamido-, Amino-Rest und R⁴ einen Hydroxymethylen-, Aminomethylen-, Alkoxymethylen-, Alkylcarbonyloxymethylen-, Alkylcarboxamid-N-methylen-, Carboxy-, Carboxamid-, Alkoxycarbonyl-, N-Alkylcarboxamid-Rest sowie R¹ bis R⁴ eine oder verschiedene dieser funktionellen Gruppen, mit Alkylresten vo C₈ bis C₆₀ darstellen;
Trehaloselipidtetraester, in denen verschiedene organische Säuren esterartig mit einem Trehalosemolekül verknüpft sind, der allgemeinen Formel 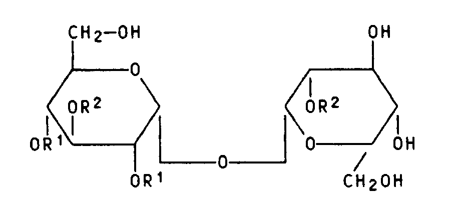 R¹ = 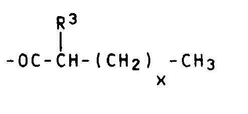 und -OC(CH₂)_{y}COOH, sowie
R² = -OC-CH-(CH₂)_{z}-CH₃
sind, in denen
x = 4 bis 22
y = 1 bis 4
z = 4 bis 22
R³ = H-Atom oder Alkylrest
bedeuten.

6. Verfahren nach den Ansprüchen 1 bis 5, dadurch gekennzeichnet, daß als Biotenside anionische Rhamnolipide eingesetzt werden:
2-0-α-L-Rhamnopyranosyl-α-L-rhamnopyranosyl-β-hydroxydecanoyl-β-hydroxydecansäure der Strukturformel: 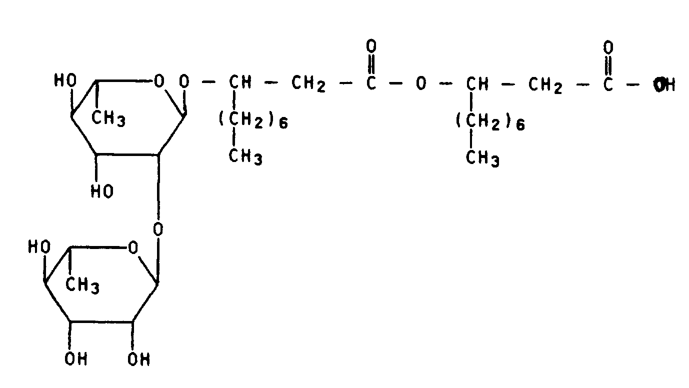 und α-L-Rhamnopyranosyl-β-hydroxidecanoyl-β-hydroxidecansäure der Strukturformel: 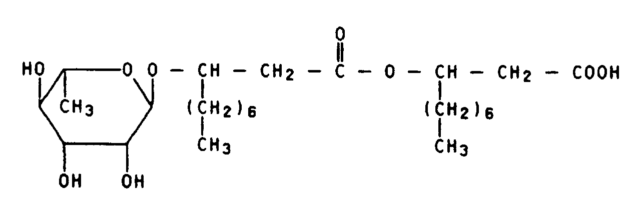 Rhamnolipide mit einem β-Hydroxidecanoyl-Rest im Molekül (mit dem Molekulargewicht von 334 bzw. 480) der Strukturformel: 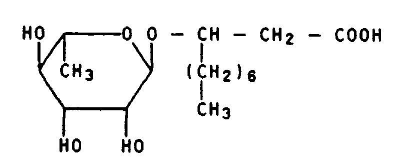 und α-L-Rhamnopyranosyl-β-hydroxidecansäure (Rhamnolipid bzw. 2-0-α-L-Rhamnopyranosyl-α-L-rhamnopyranosyl-β-hydroxidecansäure) der Strukturformel:

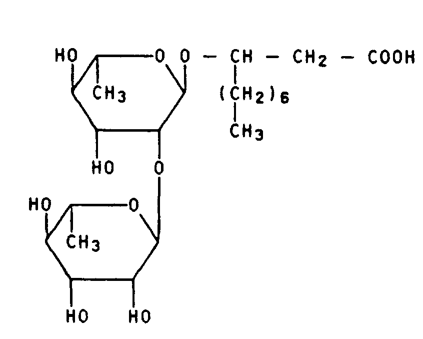

7. Verfahren nach den Ansprüchen 1 bis 6, dadurch gekennzeichnet, daß die zugesetzten Nährstoffe aus wasserlöslichen N-, K-, Ca-, Mg-, Fe-Salzen bestehen, insbesondere aus (NH₄)SO₄, MgSO₄·7H₂O, KCl, CaCl₂·2 H₂O, FeCl₃·6 H₂O.

8. Verfahren nach den Ansprüchen 1 bis 7, dadurch gekennzeichnet, daß kontaminierte Bodenschichten abgetragen, in einen Reaktor eingeführt und in diesem mit Wasser durchwirbelt werden unter Zusatz von Nährstoffen bei einer konstanten Temperatur im Bereich von 10 bis 40°C und im pH-Bereich von 4 bis 8 und unter Zusatz von nichtionischen oder kationischen Biotensiden und gegebenenfalls unter Zusatz von chemischen Tensiden unter Belüftung der kontaminierten Bodenschichten mit den darin enthaltenen, natürlichen Mikroorganismenpopulation zur raschen mikrobiellen Oxydation der Kohlenwasserstoffe unter Bildung von CO₂ und H₂O durch Einstellung einer Zeit bis zur praktisch vollständigen Mineralisation, danach das Gemisch der festen und der flüssigen Phase aus praktischen Kohlenwasserstoff-freien Böden mit der darin enthaltenen Biomasse von der wäßrigen Lösung abgetrennt und diese in den Reaktor zurückgeführt oder abgeführt wird.

9. Verfahren nach Anspruch 8, dadurch gekennzeichnet. daß dieses mit einer Belüftungsrate von 0,05 bis 1,0 Normliter Luft/Liter Reaktorvolumen/Minute durchgeführt wird.

10. Verfahren nach den Ansprüchen 8 und 9, dadurch gekennzeichnet, daß die Mineralisierung in kontinuierlicher Prozeßführung durchgeführt wird.

11. Verfahren nach den Ansprüchen 8 bis 10, dadurch gekennzeichnet, daß die Prozeßführung außer mit mechanisch gerührten Reaktoren auch mit hydrodynamischen Reaktoren durchgeführt wird.

12. Verfahren nach den Ansprüchen 8 bis 11, dadurch gekennzeichnet, daß dieses als Schnelltest zur Optimierung des mikrobiellen Abbaues der Kohlenwasserstoffe in kontaminierten Bodenschichten eingesetzt wird.

13. Verfahren nach den Ansprüchen 1 bis 12, dadurch gekennzeichnet, daß mit Kohlenwasserstoffen kontaminierte Böden, zerkleinerte Baumrinde, insbesondere aus Kiefernholz, durch Einfräsen oder den angehobenen, kontaminierten Bodenschichten durch Vermischen zugegeben wird.

14. Verfahren nach den Ansprüchen 1 bis 13, dadurch gekennzeichnet, daß den kontaminierten Böden Biotenside in einer Menge von 0,5 bis 20 g auf 1 kg kontaminierten Mineralölanteil zudosiert werden, wobei unter Biotensiden der Wirkstoffanteil gerechnet wird.

15. Verfahren nach den Ansprüchen 1 bis 14, dadurch gekennzeichnet, daß die Reinigung von mit Kohlenwasserstoffen kontaminierten Böden in situ derart erfolgt, daß diesen durch ein festes oder flexibles Rohrleitungssystem mit in Abständen angeordneten Öffnungen Luft fortlaufend oder in Abständen durch Einpressen zugeführt wird, und daß anionische oder kationische Biotenside, gegebenenfalls in Mischung mit chemischen Tensiden, als Lösung oder Dispersion in den Boden mit der Druckluft im Nebenschluß eingedüst, oder auf den Boden aufgesprüht, oder mit Wasser auf den Boden aufgedüst, oder eingebracht werden und gegebenenfalls diese Zugabe in Abständen wiederholt wird zur Züchtung der in den Böden enthaltenen, natürlichen Mikroorganismenpopulation zur beschleunigten mikrobiellen Oxidation der Kohlenwasserstoffe unter Bildung von CO₂ und H₂O bis zur praktisch vollständigen Mineralisation.

16. Verfahren nach den Ansprüchen 1 bis 15, dadurch gekennzeichnet, daß selektierte und gegebenenfalls optimierte Mikroorganismen zusammen mit den Biotensiden und gegebenenfalls chemischen Tensiden den kontaminierten Böden zugeführt werden.

## Claims

1. A process for improving the microbial decontamination of soils contaminated with hydrocarbons, in particular with mineral oils, by microbial oxidation, wherein in addition to supplying the oxygen necessary for degradation, by aeration, soluble nutrients, water and soluble or dispersed biosurfactants as such or mixed with chemical surfactants are metered into the contaminated soils directly or into the removed contaminated soil layers, in one or more batches at time intervals, in an amount such that the formation of toxic intermediates which slow down or block microbial degradation is prevented, the accessibility of mineral oils and their products for the microorganisms is simultaneously increased and, as a result, accelerated, virtually complete mineralization by respiration to CO₂ and H₂O is effected.

2. A process as claimed in claim 1, wherein a mixture of biosurfactants and chemical surfactants in a weight ratio of from 0.1 : 1 to 1 : 1 is metered in.

3. A process as claimed in claim 1 or 2, wherein mono-, di-, oligo- and polysaccharides, as the hydrophilic moiety, and functionalized fatty acids, as the hydrophobic moiety, in particular trehalose dicorynomycolate, trehalose lipid tetraesters or rhamnose lipids, are used as biosurfactants.

4. A process as claimed in any of claims 1 to 3, wherein the chemical surfactants used are isoalkylphenyl polyethylene glycol acetate, as a mixed surfactant consisting of 60% of ionic component and 40% of nonionic component, characterized as nonylphenol polyethylene glycol acetate with 5 ethylene oxide units, and nonionic polyoxyethylene sorbitan monooleate.

5. A process as claimed in any of claims 1 to 4, wherein the biosurfactants used are:
glycolipids of the following structure: 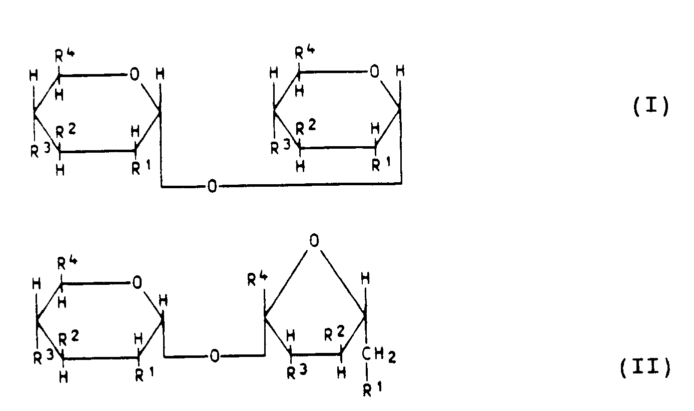 where, in formulae I and II, the glycosidic bond 1,1; 1,2; 1,3; 1,4; 1,6 in the anomeric forms α,α; α,β; β,β and the groups R¹ to R³ in the positions 1, 2, 3 and 4 are in the cis or trans configuration, and R¹ to R³ are each hydroxyl, alkoxy, alkylcarbonyloxy, alkylcarboxamido or amino and R⁴ is hydroxymethylene, aminomethylene, alkoxymethylene, alkylcarbonyloxymethylene, alkylcarboxamido-N-methylene, carboxyl, carboxamido, alkoxycarbonyl or N-alkylcarboxamido, and R¹ to R⁴ are each one group or different groups selected from these funtional groups, having C₈-C₆₀ alkyl radicals;
trehalose lipid tetraesters, in which different organic acids are linked by an ester bond to a trehalose molecule, of the formula 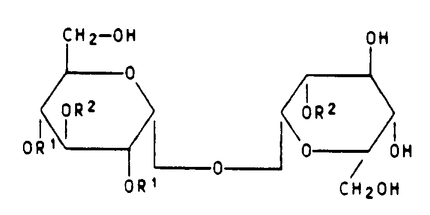 where R¹ is 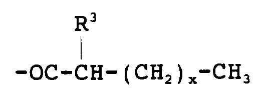 and -OC(CH₂)_{y}COOH and R² is -OC-CH-(CH₂)_{z}-CH₃, where x is from 4 to 22, y is from 1 to 4 and z is from 4 to 22, and R³ is H or alkyl.

6. A process as claimed in any of claims 1 to 5, wherein the biosurfactants used are anionic rhamnose lipids: 2-O-α-L-rhamnopyranosyl-α-L-rhamnopyranosyl-β-hydroxy-decanoyl-β-hydroxydecanoic acid of the structural formula: 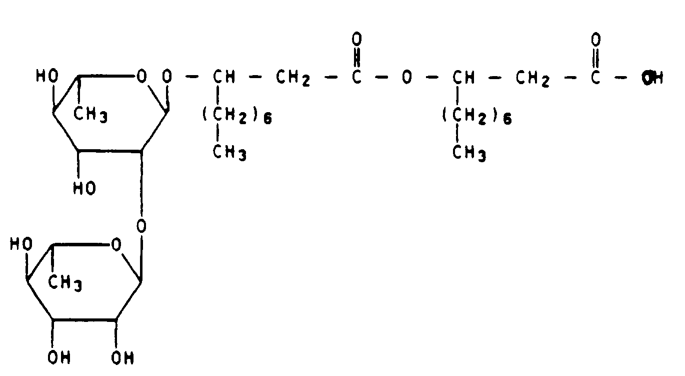 and α-L-rhamnopyranosyl-β-hydroxydecanoyl-β-hydroxydecanoic acid of the structural formula: 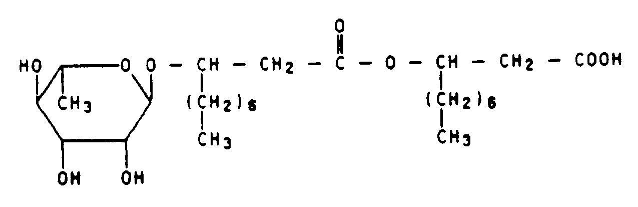 Rhamnolipids having a β-hydroxydecanoyl radical in the molecule (with a molecular weight of 334 or 480) of the structural formula: 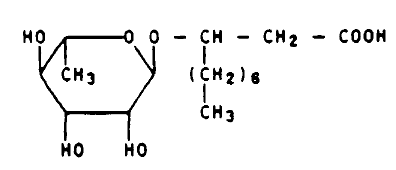 and α-L-rhamnopyranosyl-β-hydroxydecanoic acid (rhamnolipid or 2-O-α-L-rhamnopyranosyl-α-L-rhamnopyranosyl-β-hydroxydecanoic acid) of the structural formula:

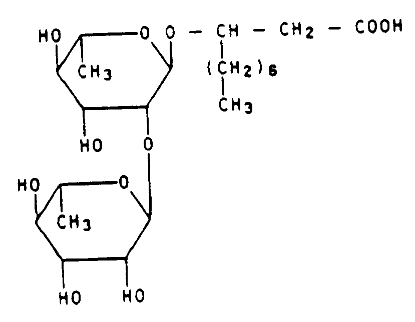

7. A process as claimed in any of claims 1 to 6, wherein the added nutrients consist of water-soluble N, K, Ca, Mg or Fe salts, in particular of (NH₄)SO₄, MgSO₄.7H₂O, KCl, CaCl₂.2 H₂O or FeCl₃.6 H₂O.

8. A process as claimed in any of claims 1 to 7, wherein contaminated soil layers are removed, introduced into a reactor and fluidized therein with water, with the addition of nutrients, at a constant temperature in the range from 10 to 40°C and at a pH of from 4 to 8 and with the addition of nonionic or cationic biosurfactants and with or without the addition of chemical surfactants, with aeration of the contaminated soil layers with the natural microorganism population present therein, for rapid microbial oxidation of the hydrocarbons with formation of CO₂ and H₂O by setting a time for virtually complete mineralization, after which the mixture of the solid phase and the liquid phase, consisting of virtually hydrocarbon-free soils with the biomass present therein, is separated off from the aqueous solution and the latter is recycled to the reactor or removed.

9. A process as claimed in claim 8, which is carried out at an aeration rate of from 0.05 to 1.0 liters (S.T.P.) of air per liter of reactor volume per minute.

10. A process as claimed in claim 8 or 9, wherein the mineralization is carried out by a continuous procedure.

11. A process as claimed in any of claims 8 to 10, wherein the procedure is carried out not only with mechanically stirred reactors but also with hydrodynamic reactors.

12. A process as claimed in any of claims 8 to 11, which is used as a rapid test for optimizing the microbial degradation of the hydrocarbons in contaminated soil layers.

13. A process as claimed in claims 1 to 12, wherein comminuted bark, in particular pine bark, is added to soils contaminated with hydrocarbons by cutting the bark into the said soils, or is added to the removed, contaminated soil layers by mixing.

14. A process as claimed in claims 1 to 13, wherein from 0.5 to 20 g of biosurfactants per 1 kg of contaminating mineral oil are metered into the contaminated soils, the biosurfactants being calculated as the proportion of active ingredient.

15. A process as claimed in claims 1 to 14, wherein the in situ decontamination of soils contaminated with hydrocarbons is carried out by a procedure in which air is forced, continuously or at intervals, into these soils through a fixed or flexible pipeline system with orifices arranged at intervals, and anionic or cationic biosurfactants, if necessary mixed with chemical surfactants, are sprayed as a solution or dispersion together with the compressed air into the soil, in the form of a mist, or are atomized onto the soil, or are sprayed with water onto the soil, or are introduced, and, if necessary, this addition is repeated at intervals, in order to cultivate the natural microorganism population present in the soil, for accelerated microbial oxidation of the hydrocarbons with formation of CO₂ and H₂O until virtually complete mineralization.

16. A process as claimed in claims 1 to 15, wherein selected and, if necessary, optimized microorganisms are fed, together with the biosurfactants and, if required, chemical surfactants, into the contaminated soils.

## Revendications

1. Procédé pour améliorer l'épuration microbienne de terrains contaminés par des hydrocarbures, en particulier par des huiles minérales, par oxydation microbienne, caractérisé en ce que l'on introduit directement dans les terrains contaminés ou dans les couches de terrains contaminées après enlèvement, outre l'oxygène nécessaire pour la dégradation par aération, des matières nutritives solubles, de l'eau et des agents tensioactifs biologiques solubles ou en dispersion, seuls ou en mélange avec des agents tensioactifs chimiques, en une ou plusieurs charges à certains intervalles de temps, en quantité telle qu'il y ait inhibition de la formation de produits intermédiaires toxiques ralentissant ou bloquant la dégradation microbienne et simultanément accès amélioré des microorganismes aux huiles minérales et produits apparentés d'où une minéralisation accélérée et pratiquement complète par respiration en CO₂ et H₂O.

2. Procédé selon la revendication 1, caractérisé en ce que l'on introduit un mélange d'agents tensioactifs biologiques et d'agents tensioactifs chimiques dans des proportions relatives de 0,1 à 1:1 en % en poids.

3. Procédé selon les revendications 1 et 2, caractérisé en ce que l'on utilise, en tant qu'agents tensioactifs biologiques, des agents tensioactifs biologiques ayant des mono-, di-, oligo- et poly-saccharides en tant que parties hydrophiles de la molécule et des acides gras fonctionnalisés en tant que parties hydrophobes de la molécule, en particulier du dicorynomycolate de tréhalose, un tétraester lipidique de tréhalose, des rhamnose-lipides.

4. Procédé selon les revendications 1 à 3, caractérisé en ce que l'on utilise, en tant qu'agents tensioactifs chimiques, des acétates d'isoalkylphénylpolyéthylène-glycols et, en tant qu'agent tensioactif mixte consistant en 60% d'un composant ionique et 40% d'un composant non-ionique, par exemple un acétate de nonylphénol-polyéthylène-glycol à 5 motifs d'oxyde d'éthylène et du mono-oléate de sorbitanne polyoxyéthyléné non-ionique.

5. Procédé selon les revendications 1 à 4, caractérisé en ce que l'on utilise, en tant qu'agents tensioactifs biologiques :
des glycolipides possédant la structure suivante : 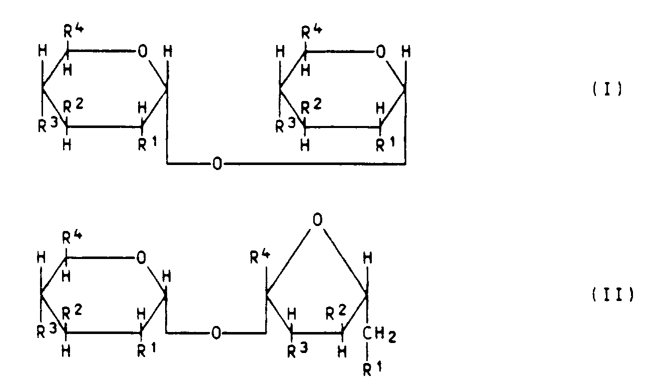 étant précisé que, dans les formules I et II, la liaison glycosidique est en position 1,1; 1,2; 1,3; 1,4; 1,6 dans les formes anomères alpha, alpha; alpha,bêta; bêta, bêta et les groupes R¹ à R³ sont dans les positions 1, 2, 3, 4 en configuration cis et trans et R¹ à R³ représentent un groupe hydroxy, alcoxy, alkylcarbonyloxy, alkylcarboxamido, amino et R⁴ un groupe hydroxyméthylène, aminométhylène, alcoxyméthylène, alkylcarbonyloxyméthylène, alkylcarboxamido-N-méthylène, carboxy, carboxamide, alcoxy carbonyle, N-alkylcarboxamide, et R¹ à R⁴ représentent un ou plusieurs de ces groupes fonctionnels, avec des groupes alkyle de C 8 à C 60 ;
des tétraesters lipidiques de tréhalose dans lesquels divers acides organiques sont reliés à l'état d'esters avec une molécule de tréhalose, de formule générale 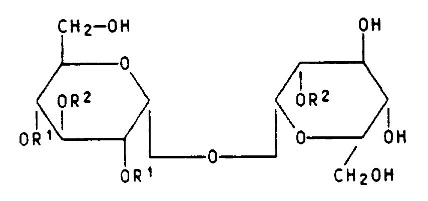 dans laquelle
R¹ = 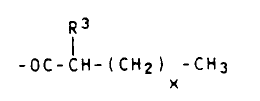 und -OC(CH₂)_{y}COOH, et
R² = -OC-CH-(CH₂)_{z}-CH₃
avec
x = 4 bis 22
y = 1 bis 4
z = 4 bis 22
R³ = atome d'hydrogène ou groupe alkyle.

6. Procédé selon les revendications 1 à 5, caractérisé en ce que l'on utilise, en tant qu'agents tensioactifs biologiques, des rhamnolipides anioniques :
l'acide 2-0-alpha-L-rhamnopyrannosyl-alpha-L-rhamnopyrannosyl-bêta-hydroxydécanoyl-bêta-hydroxydécanoïque de formule de structure 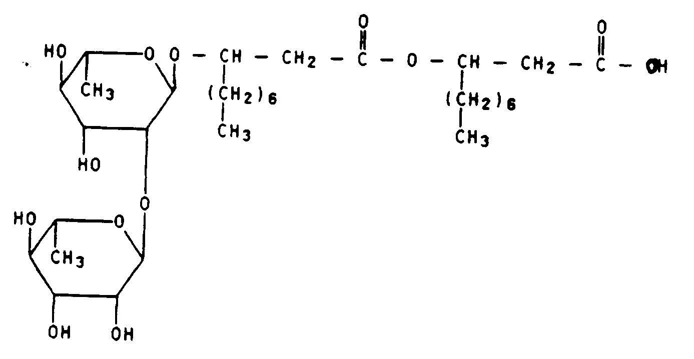 et l'acide alpha-L-rhamnopyrannosyl-bêta-hydroxydécanoyl-bêta-hydroxydécanoïque de formule de structure 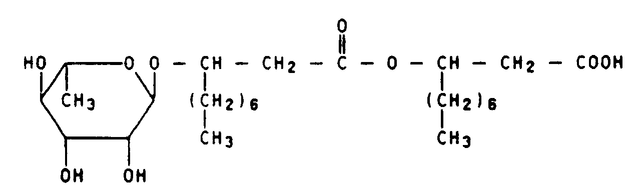 des rhamnolipides avec un groupe bêta-hydroxydécanoyle dans la molécule (de poids moléculaires respectifs 334 et 480) de formule de structure 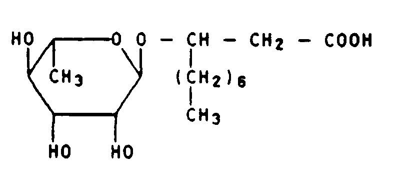 et l'acide alpha-L-rhamnopyrannosyl-bêta-hydroxydécanoïque (rhamnolipide ou respectivement acide 2-0-alpha-L-rhamnopyrannosyl-alpha-L-rhamnopyrannosyl-bêta-hydroxydacanoïque) de formule de structure

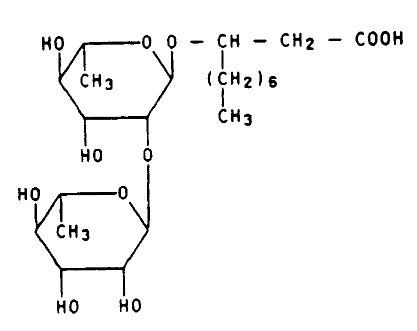

7. Procédé selon les revendications 1 à 6, caractérisé en ce que les matières nutritives ajoutées consistent en sels hydrosolubles de N, K, Ca, Mg, Fe, en particulier en (NH₄)SO₄, MgSO₄, 7H₂O KC1, CaC1₂, 2H₂0, FeC1₃, 6H₂O.

8. Procédé selon les revendications 1 à 7, caractérisé en ce que l'on enlève les couches de terrains contaminées, on les introduit dans un réacteur dans lequel on fait passer de l'eau en mouvement tourbillonnaire avec adjonction de matières nutritives à une température constante dans l'intervalle de 10 à 40 degrés C et à un pH de 4 à 8 avec adjonction d'agents tensioactifs biologiques non-ioniques ou cationiques et le cas échéant avec adjonction d'agents tensioactifs chimiques avec aération des couches de terrains contaminées contenant la population naturelle de microorganismes pour oxydation microbienne rapide des hydrocarbures avec formation de CO₂ et H₂O par réglage à une durée conduisant à une minéralisation pratiquement complète, après quoi on sépare de la solution aqueuse le mélange de la phase solide et de la phase liquide consistant en la terre pratiquement exempte d'hydrocarbures, contenant la biomasse, et on recycle la solution aqueuse au réacteur ou on la rejette.

9. Procédé selon la revendication 8, caractérisé en ce que l'on opère à un débit d'aération de 0,05 à 1,0 l normal d'air par litre de volume du réacteur et par minute.

10. Procédé selon les revendications 8 et 9, caractérisé en ce que la minéralisation est réalisée en continu.

11. Procédé selon les revendications 8 à 10, caractérisé en ce que l'on opère dans des réacteurs à agitation mécanique ou dans des réacteurs hydrodynamiques.

12. Procédé selon les revendications 8 à 11, caractérisé en ce qu'on le met en oeuvre sous forme d'un test rapide visant à déterminer les conditions optimales de la dégradation microbienne des hydrocarbures dans les couches de terrains contaminées.

13. Procédé selon les revendications 1 à 12, caractérisé en ce que l'on introduit dans les terrains contaminés par des hydrocarbures, par fraisage, de l'écorce d'arbre broyée, en particulier de bois de conifères, ou bien on l'ajoute aux couches de terrains contaminées après enlèvement, par mélange.

14. Procédé selon les revendications 1 à 13, caractérisé en ce que l'on introduit, dans les terrains contaminés, les agents tensioactifs biologiques en quantités de 0,5 à 20 g pour 1 kg d'huile minérale contaminante, ces quantités d'agents tensioactifs biologiques étant exprimées en substance active.

15. Procédé selon les revendications 1 à 14, caractérisé en ce que l'épuration des terrains contaminés par des hydrocarbures est réalisée in situ en ce que l'on introduit dans ces terrains, au moyen d'un système de conduits fixes ou souples portant des orifices à intervalles réguliers, de l'air en continu ou à intervalles par refoulement et on injecte dans les terrains, en dérivation avec l'air comprimé ou par pulvérisation sur le terrain ou par injection avec de l'eau sur le terrains, les agents tensioactifs biologiques anioniques ou cationiques éventuellement en mélange avec des agents tensioactifs chimiques, à l'état de solutions ou de dispersions, et le cas échéant on répète ces introductions à intervalles réguliers pour culture de la population naturelle de microorganismes existant dans le terrain en vue d'une oxydation microbienne accélérée des hydrocarbures avec formation de CO₂O et H₂O jusqu'à minéralisation pratiquement complète.

16. Procédé selon les revendications 1 à 15, caractérisé en ce que l'on introduit dans les terrains contaminés des microorganismes sélectionnés et le cas échéant optimisés avec les agents tensioactifs biologiques et le cas échéant les agents tensioactifs chimiques.
